# EUROPEAN PATENT SPECIFICATION

(11) **EP 2 299 178 B1**
(45) Date of publication and mention of the grant of the patent: **04.11.2015**
(21) Application number: 09170508.7
(22) Date of filing: 17.09.2009
(51) Int. Cl.: F23L 7/00, F02C 3/30, F23R 3/28

(54) **A method and gas turbine combustion system for safely mixing H2-rich fuels with air**
Verfahren und Gasturbinenverbrennungssystem zum sicheren Mischen von H2-reichen Brennstoffen mit Luft
Procédé et système de combustion de turbine à gaz pour mélanger sans danger des carburants riches en H2 avec de l'air

(43) Date of publication of application: 23.03.2011
(73) Proprietor: ALSTOM Technology Ltd, 5400 Baden (CH)
(72) Inventor: Carroni, Richard, 5443, Niederrohrdorf (CH); Biagioli, Fernando, 5442, Fislisbach (CH)
(74) Representative: Alstom Technology Ltd

(56) References cited:
- EP-A1- 0 626 543
- EP-A1- 1 990 578
- EP-A1- 2 299 178
- EP-A2- 0 833 105
- WO-A1-2008/135362
- WO-A1-2008/155242
- WO-A1-2009/068427
- WO-A1-2009/109448
- WO-A1-2009/109454
- US-A1- 2004 226 299
- US-A1- 2009 113 895

## Description

### Background of the invention

The present invention relates to gas turbines. It refers to a method for safely mixing H2-rich fuels with air in a gas turbine combustion system.

### Prior Art

Current combustors for hydrogen-rich fuels rely upon very high levels of dilution (with inert species, e.g. N2 and/or steam) of diffusion flames (WO-A1-2008/135362; WO-A1-2008/155242). Derating (i.e. reducing flame temperatures) is also commonly resorted to (see for example EP-A1-0 731 255 or EP-A1-0 899 438). Efforts are being made to develop lean-premix combustion systems for hydrogen-rich fuels in order to further reduce emissions and to minimize costly diluents. Such systems require a high degree of premixing. Unfortunately, hydrogen-rich fuels are so reactive that significant modifications are necessary in order to safely and cleanly burn these fuels. The modifications (e.g. increasing burner velocity, using very high fuel jet velocities), however, are mostly incompatible with the requirements of modern gas turbine burners (low burner pressure loss, low fuel pressure loss).

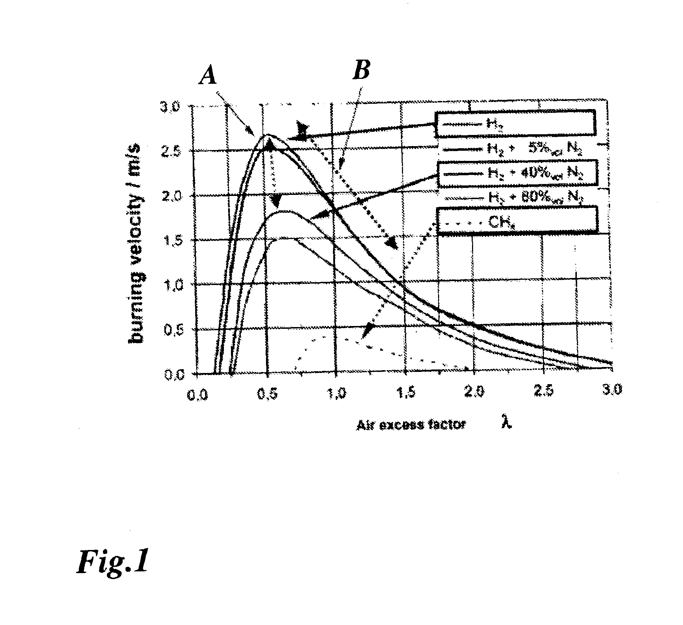

The problem with introducing H2-rich fuels into air in order to attain a good air/fuel mixture prior to combustion is exemplified by Figure 1, which shows laminar flame speeds for CH4 (the standard gas turbine fuel) and for various H2/N2 mixtures. H2-rich laminar flame speeds differ from their CH4 counterparts in that:
- The peak flame speed is at least 6 times higher.
- The flame speed in the entire range of usable fuel/air mixtures is higher than for CH4.
- The peak flame speed occurs at the much lower air excess factor (λ) of approx. 0.6, rather than approx. 1.0.

In actual fact, it is the turbulent burning velocity that largely determines the flame location in a real burner. This parameter exacerbates the situation for H2-rich fuels, given that the turbulent burning velocity is a function of pressure for H2 but not so for CH4.

When fuel is injected into hot air, the region near the injection point is characterized by very poor mixing. On a local scale, λ can vary between 0 and infinity.

### Natural gas:

The flammability limits are rather narrow. On the rich side, a flame cannot be sustained, even at relatively high (≈ 0.7 in Figure 1). The burning velocity (and hence laminar flame speed) is generally low, particularly near the rich extinction limit. The risk of ignition in the injection area is low, and there is insufficient anchoring in the event of flashback (i.e. the flame is blown off).

### H2-rich fuels:

The flammability limits are very wide, with very rich mixtures (λ < 0.3) capable of sustaining a flame. The burning velocities (and hence laminar flame speeds) are high. Unfortunately, the peak reactivity of H2-rich fuels is also in the rich region (typically around lambda = 0.5), which means that the risk of ignition in the injection area is very high, and the flame anchoring (once flame jump occurs) is very strong. Flashback thus results in permanent flame anchoring, which leads to high emissions and possibly also to hardware destruction.

Common methods of dealing with such high burning velocities, and the drawbacks thereof, are listed below. None of these traditional solutions, however, address the critical issue of high flammability of very rich fuel/air mixtures.
- Utilizing dilution. At any given mixing quality, this action reduces the burning velocity (see dotted double arrow A in Figure 1), but not sufficiently. Furthermore, this action does not shift the equivalence ratio at which peak burning velocities occur. Excessive dilution results in high fuel pressure losses and additional costs (The diluent is not free. In the case of N2, its pressure must be increased from that of the air separation unit to that of the fuel. In the case of steam, there is a loss of efficiency associated with extracting steam from the steam cycle).
- Significantly increasing the burner air velocity. In order to be effective, the burner velocity must be increased by a large amount, thereby resulting in larger pressure losses across the burner and hence reduction in gas turbine efficiency. Furthermore, such high burner velocities tend to be incompatible with the standard backup fuels (e.g. Natural Gas). It must be noted that there will always be regions of lower air velocity (e.g. boundary layers), which are often near those locations from which fuel is injected.
- Injecting fuel at higher velocities in order to avoid flame-holding. Excessive jet velocities cause high-pressure losses in the fuel system, resulting in higher costs. Approaching the sonic limit also poses stability problems.

US 20040226299 discloses a method for safely mixing H₂-rich fuels with air in a gas turbine combustion system.

### Summary of the invention

It is an object of the present invention to provide a method for safely mixing H2-rich fuels with air in gas turbine combustion systems, which effectively permits the local fuel/air mixture to bypass the peak burning velocity (i.e. λ = 0.6) prior to injection into the main burner air stream (known as liner air), thereby avoiding the shortcomings of the state of the art.

This object is obtained by a method according to claim 1.

According to one embodiment of the invention said premixing step is done in a manner which prevents flame anchoring near the injection location and in the burner.

According to another embodiment of the invention an air excess factor of λ > 1, preferably of λ > 1.3, is achieved in said premixing step.

According to another embodiment of the invention air is separated into 02 and N2 by means of an air separation unit (ASU), and a portion of the N2 from the air separation unit (ASU) is added to the main burner air and/or pre-premixed fuel/air mixture.

According to a further embodiment of the invention a pre-premixer in the form of a simple, preferably round, channel with straight or slightly swirling air flow is used to avoid recirculation and/or stagnation regions.

According to another embodiment of the invention a pre-premixer consisting of narrow channels whose hydraulic diameter is less than the quenching distance, is used.

According to another embodiment of the invention the boundary layers of the air flow in said pre-premixer are energized, especially by using some film air, in order to increase velocities these regions.

According to a further embodiment of the invention the air flow is additionally accelerated via the "jet-pump" effect of injecting large volumes of H2/N2 fuel.

According to another embodiment of the invention water mist is injected into the H2-rich fuel to enhance the safety of the method by means of the relative cooling due to the subsequent evaporation of said injected water.

According to a further embodiment of the invention a main swirler in a swirl-stabilized burner is utilized to further increase the velocity in the pre-premixer by taking advantage of the fact that the local static pressure in the central region of the burner is lower than the nominal burner pressure.

A gas turbine combustion system for applying the method according to the invention comprises:
a combustion chamber and at least one burner opening into said combustion chamber to inject a stream of burner air into said combustion chamber;
at least one pre-premixer for providing a pre-premixed fuel/air mixture;
whereby said at least one burner and said at least one pre-premixer are arranged relative to each other, such that said pre-premixed fuel/air mixture is injected into said stream of burner air.

According to an embodiment of the inventive gas turbine combustion system, the at least one pre-premixer has the form of a simple, preferably round, channel with straight or slightly swirling air flow.

According to another embodiment of the inventive gas turbine combustion system, the at least one pre-premixer consists of narrow channels whose hydraulic diameter is less than the quenching distance.

According to an embodiment of the inventive gas turbine combustion system, said at least one burner is a swirl-stabilized burner.

According to an embodiment of the inventive gas turbine combustion system, said at least one burner is a so-called EV burner (in place of many: EP 0 321 809 B1) or a so-called AEV burner (in place of many: EP 0 704 657).

According to an embodiment of the inventive gas turbine combustion system, said at least one burner is a so-called SEV burner (in place of many: EP 0 620 362 B1, pos. 5).

### Brief Description of the Drawings

The present invention is now to be explained more closely by means of different embodiments and with reference to the attached drawings.
- Fig. 1: shows laminar flame speeds for CH4 (the standard gas turbine fuel) and for various H2/N2 mixtures at 1 atm and 20 °C;
- Fig. 2: illustrates the pre-premixing concept according to the invention;
- Fig. 3: shows an exemplary embodiment of a burner encompassing the pre-premixing concept according to the invention; and
- Fig. 4: demonstrates that the main swirler in a swirl-stabilized burner can be utilized to further increase the velocity in the pre-premixer, simply by taking advantage of the fact that the local static pressure in the central region of the burner is lower than the nominal burner pressure.

### Detailed Description of the different Embodiments of the Invention

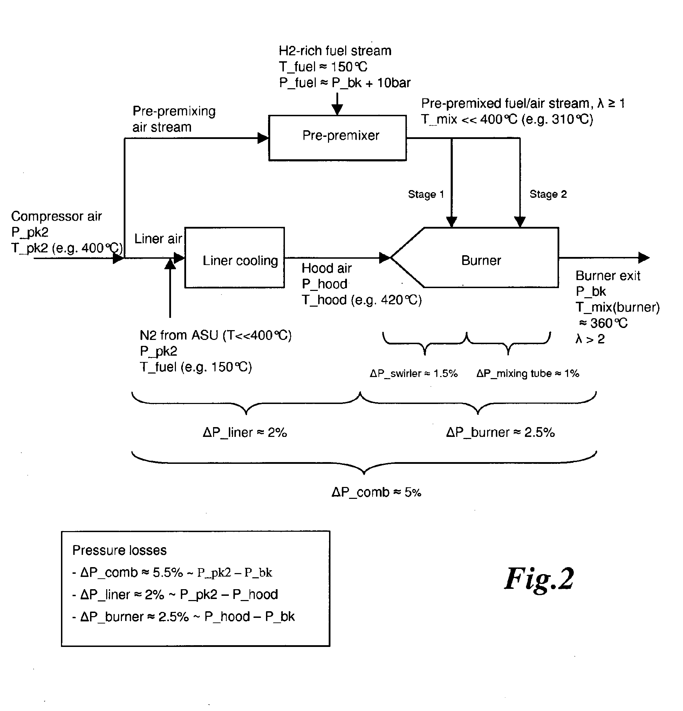

The object of the present invention is achieved by premixing all of the fuel with a portion of burner air (denoted as "pre-premixing air") in a manner which prevents flame anchoring, and then injecting this fuel/air mixture (characterized by λ > 1, preferably λ > 1.3) into the main burner air stream (i.e. the liner air); this can be done in one or more stages. Figure 2 illustrates the concept (which is called "pre-premixing"). P_pk2 and T_pk2 are the pressure and temperature, respectively, at the compressor exit of the gas turbine. P_fuel and T_fuel are the pressure and temperature, respectively, of the fuel, T_mix is the temperature of the pre-premixing mixture, while P_hood and T_hood are the pressure and temperature, respectively, of the hood air (which is the air that enters the burner). The pre-premixing method can involve elements of the traditional solutions for H2-rich fuels (e.g. high air velocities, high dilution levels), but the negative effects are rather limited since these methods only apply to a portion of the overall burner air (i.e. the pre-premixing air), rather than the entire burner air flow.

Mass and energy balances show that about 25% and 45% of the total burner air is needed such that the pre-premixed fuel/air has a λ of 0.6 and 1.0, respectively, for a 70/30 H2/N2 fuel (air temperature 420 °C, fuel temperature 150 °C, T_ad = 1750K).

In the event that the resulting liner cooling is insufficient (because part of the compressor air was diverted to the pre-premixer), it would be possible to add the remaining N2 from the ASU (air separation unit) to the liner air, the mixture temperature of which would be significantly below the standard liner air temperature of 400 °C. This stream of N2 would only have to be compressed from the ASU pressure (approx. 5bar for a low-pressure device, or 15bar for a high-pressure ASU) to the P_pk2 pressure (i.e. at compressor exit).

The pre-premixing process is driven by a pressure loss (ΔP) that is larger than that across the burner. Figure 2 - based on a GT13E2 gas turbine of the applicant under full-load conditions for an AEV-125 burner (AEV= Advanced Environmental) - shows that, typically, this pressure loss is proportional to the sum of the liner and swirler pressure losses, ΔP_liner and ΔP_swirler, amounting to ΔP ≈ 2 to 3%.

Further safety benefits of the pre-premixing concept are noted:
- The relatively cold fuel is mixed with only a portion of the entire burner air, meaning that the pre-premixed mixture temperature T_mix is significantly lower (278 °C and 310 °C for λ = 0.6 and 1.0, respectively, compared to 350 °C when the fuel is mixed with all the burner air (based on 70/30 H2/N2 at 150 °C). This strongly reduces the reactivity of the air/fuel mixture, thereby greatly assisting the safe transition to λ ≥ 1).
- The pre-premixing air stream is cooler than the hood air (by around 20 °C), since it is not used for liner cooling. This further reduces reactivity in the pre-premixer.
- If N2 is used for a part of the pre-premixing air, then the risk of ignition is reduced due to
   o lower 02; and
   o lower temperature.
- The pre-premixed mixture can achieve much greater penetration depths in the burner (due to the higher fuel mass flow rates relative to the air mass flow), thereby permitting better mixing than when the non-pre-premixed fuel is injected into the burner.

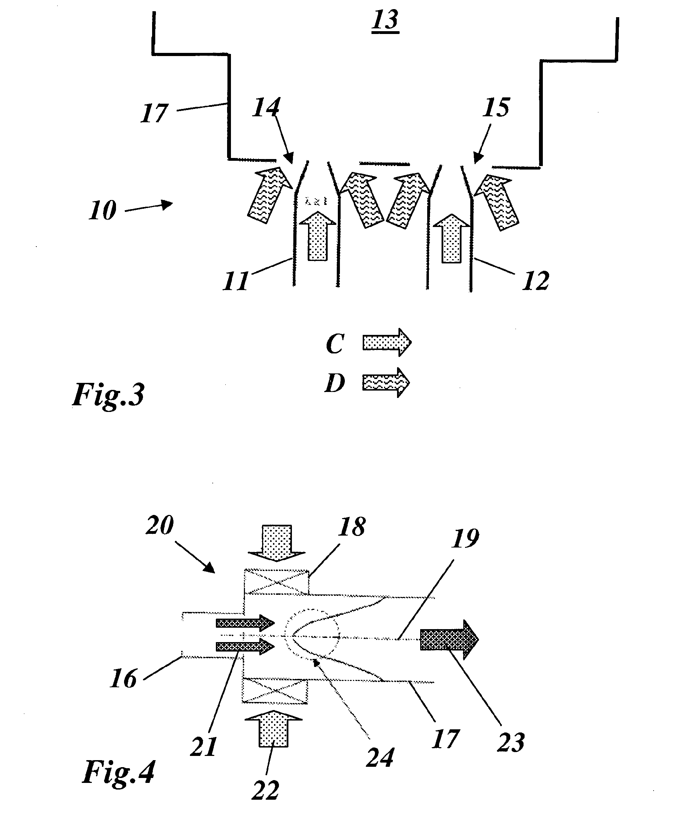

Several methods of achieving the desired pre-premixing are described below. There are undoubtedly other means of achieving the proposed idea.
- The pre-premixer (16 in Figure 4) can consist of a simple channel (preferably round) with straight air flow. Aerodynamically simple geometries avoid recirculation and/or stagnation regions. The boundary layers can be energized (e.g. using some film air) in order to increase velocities these regions. Both jet in cross-flow and co-flowing jets can be used. The latter further reduce risk of flame anchoring.
   ○ Lack of swirl in the pre-premixer means that the air velocity can be around 50% higher than that in the burner (approx 120m/s), using the given ΔP.
   ○ The air flow can additionally be accelerated via the "jet-pump" effect of injecting large volumes of H2/N2 fuel.
- The pre-premixer can consist of small channels whose hydraulic diameter is less than the quenching distance. Injection and pre-mixing of the fuel in these small channels prevents homogeneous ignition from occurring during the mixing process and prior to the attainment of higher λ. The air velocity can be small, since safety is now promoted by quenching rather than by convection. Small air velocities in narrow channels are compatible with the available ΔP.
- An injection of water into H2-rich fuel and relative cooling by subsequent evaporation would further enhance the safety of the present methodology.

Figure 3 is an example of a burner encompassing the new pre-premixing concept described above. According to Figure 3, in a combustion system 10 a pre-premixed fuel/air mixture C is injected through pre-premixers 11 and 12 into a burner 17 which opens into a combustion chamber 13. Main air 22 is added through main burner air inlets 14 and 15 near the exit of the pre-premixers 11, 12. The pre-premixing concept can of course be adapted to more conventional burners such as the AEV and also the SEV (SEV=Sequential Environmental), see embodiments below. One or more pre-premixers may be provided per burner.

### Embodiment 1:

The idea can be used for SEV (i.e. reheat) combustion as well. In this case, the pre-premixer temperature benefit would be even greater since the PK2 air used in the pre-premixer is much colder (typically 400 °C - 450 °C) than the 1000 °C of the main burner air. A similar benefit would be seen in the application to non-reheat lean-premix burners in recuperated combustion systems.

### Embodiment 2:

Use less air in the pre-premixer. Whilst this gives λ < 1, the local mixture temperature in the pre-premixer will be significantly smaller. This can compensate for the higher flame speeds associated with richer fuel/air mixtures. This also leaves more air for liner cooling.

### Embodiment 3:

The pre-premixing concept can be applied to diffusion burners too. Such a configuration would permit clean and safe operation without derating (diffusion burners often have to run on lower firing temperatures for NOx reasons) and without the need for excessive dilution.

### Embodiment 4

The main swirler in a swirl-stabilized burner can be utilized to further increase the velocity in the pre-premixer, simply by taking advantage of the fact that the local static pressure in the central region of the burner is lower than the nominal burner pressure (see dotted line B in Figure 1). This is demonstrated in Figure 4. According to Figure 4, a combustion system 20 comprises a burner 17 with a pre-premixer 16. A pre-premixed fuel/air mixture 21 generated within the pre-premixer 16 enters the burner 17 in axial direction (axis 19). Main air 22 enters the burner 17 via a hood 18, thereby generating a swirl with a low static pressure region 24. The resulting fully premixed fuel/air mixture 23 exits the burner 17 to enter the subsequent combustion chamber. In general, the main air flow (i.e. "hood" or liner air) can enter the burner via axial, radial or "hybrid" swirlers.

### List of Reference Numerals

- 10,20: Combustion system
- 11,12: Pre-premixer
- 13: Combustion chamber
- 14,15: Main burner air inlet
- 16: Pre-premixer
- 17: Burner
- 18: Hood
- 19: Axis
- 21,C: Pre-premixed fuel/air mixture
- 22,D: Main air
- 23: Fully premixed fuel/air mixture
- 24: Low static pressure region

## Claims

1. A method for safely mixing H₂-rich fuels with air in a gas turbine combustion system (10, 20) comprising a combustion chamber (13), at least one burner (17) arranged upstream of the combustion chamber, at least one pre-premixer (11, 12, 16) arranged upstream of the burner, and comprising the steps of:
- Providing a first stream of a burner air and a second stream of a H₂-rich fuel;
- Premixing the stream of H₂-rich fuel with said first stream of burner air within the pre-premixer (11, 12, 16) to produce a pre-premixed fuel/air mixture (21);
- Injecting the pre-premixed fuel/air mixture (21) and a stream of burner main air (22) Into the burner (17);
- Resulting fully premixed fuel/air mixture (23) exits the burner (17) to enter the subsequent combustion chamber (13).

2. The method according to claim 1, **characterized in that** said premixing step is done in a manner which prevents flame anchoring near the injection location and In the burner.

3. The method according to claim 1 or 2, **characterized in that** an air excess factor of [lambda]> 1, preferably of [lambda] > 1.3, is achieved in said premixing step.

4. The method according to one of the claims 1 to 3, **characterized in that** air is separated into 02 and N2 by means of an air separation unit (ASU), and a portion of the N2 from the air separation unit (ASU) is added to the main burner air (D, 22) and/or pre-premixed fuel/air mixture (C, 21).

5. The method according to one of the claims 1 to 4, **characterized in that** a pre-premixer (16) in the form of a simple, preferably round, channel with straight or slightly swirling air flow is used to avoid recirculation and/or stagnation regions.

6. The method according to one of the claims 1 to 4, **characterized in that** a pre-premixer consisting of narrow channels whose hydraulic diameter is less than the quenching distance, is used.

7. The method according to claim 5, **characterized in that** the boundary layers of the air flow in said pre-premixer (16) are energized, especially by using some film air, in order to increase velocities these regions.

8. The method according to claim 7, **characterized in that** the air flow is additionally accelerated via the "jet-pump" effect of injecting large volumes of H2/N2 fuel.

9. The method according to one of the claims 1 to 8, **characterized in that** water mist is injected into the H2-rich fuel to enhance the safety of the method by means of the relative cooling due to the subsequent evaporation of said injected water.

10. The method according to one of the claims 1 to 9, **characterized in that** a main swirler in a swirl-stabilized burner (17) is utilized to further increase the velocity in the pre-premixer (16) by staking advantage of the fact that the local static pressure in the central region of the burner (17) is lower than the nominal burner pressure.

11. A gas turbine combustion system (10, 20) for applying a method according to one of the claims 1 to 10, comprising:
a combustion chamber (13) and at least one burner (17) opening into said combustion chamber (13) to inject a stream of burner air into said combustion chamber (13); at least one premixer;
at least one pre-premixer (11, 12; 16) for providing a pre-premixed fuel/air mixture (C, 21);
whereby said at least one burner (17) and said at least one pre-premixer (11, 12; 16) are arranged relative to each other, such that said pre-premixed fuel/air mixture (C, 21) is injected into said stream of burner air.

12. A gas turbine combustion system according to claim 11, wherein the at least one pre-premixer (16) has the form of a simple, preferably round, channel with straight or slightly swirling air flow.

13. A gas turbine combustion system according to claim 11, wherein the at least one pre-premixer consists of narrow channels whose hydraulic diameter is less than the quenching distance.

14. A gas turbine combustion system according to one of the claims 11 to 13, wherein said at least one burner is a swirl-stabilized burner (17).

15. A gas turbine combustion system according to one of the claims 11 to 13, wherein said at least one burner is an AEV burner.

16. A gas turbine combustion system according to one of the claims 11 to 13, wherein said at least one burner is an SEV burner,

## Patentansprüche

1. Verfahren zum sicheren Mischen H₂-reicher Brennstoffe mit Luft in einem Gasturbinenverbrennungssystem (10, 20), das eine Brennkammer (13), mindestens einen Brenner (17), der stromaufwärts der Brennkammer eingerichtet ist, mindestens einen Vor-Vormischer (11, 12, 16), der stromaufwärts des Brenners eingerichtet ist, umfasst, und die folgenden Schritte umfasst:
- Bereitstellen eines ersten Stroms einer Brennerluft und eines zweiten Stroms eines H₂-reichen Brennstoffs,
- Vormischen des Stroms H₂-reichen Brennstoffs mit dem ersten Brennerluftstrom innerhalb des Vor-Vormischers (11, 12, 16), um ein vorgemischtes Luft-Brennstoffgemisch (21) zu erzeugen,
- Einspritzen des vorgemischten Luft-Brennstoffgemischs (21) und eines Stroms Brennerhauptluft (22) in den Brenner (17),
- resultierend darin, dass das vollständig vorgemischte Luft-Brennstoffgemisch (23) aus dem Brenner (17) austritt, um in die darauffolgende Brennkammer (13) einzutreten.

2. Verfahren nach Anspruch 1, **dadurch gekennzeichnet, dass** der Vormischschritt auf eine Art erfolgt, die verhindert, dass sich eine Flamme nahe der Einspritzstelle und in dem Brenner verankert.

3. Verfahren nach Anspruch 1 oder 2, **dadurch gekennzeichnet, dass** bei dem Vormischschritt ein Luftüberschussfaktor von [Lambda] > 1, vorzugsweise von [Lambda] > 1,3 erzielt wird.

4. Verfahren nach einem der Ansprüche 1 bis 3, **dadurch gekennzeichnet, dass** die Luft in O₂ und N₂ mittels einer Luftabscheideeinheit (ASU) getrennt wird und ein Teil des N₂ von der Luftabscheideeinheit (ASU) zu der Hauptbrennerluft (D, 22) und/oder dem vorgemischten Luft-Brennstoffgemisch (C, 21) hinzugefügt wird.

5. Verfahren nach einem der Ansprüche 1 bis 4, **dadurch gekennzeichnet, dass** ein Vor-Vormischer (16) in der Form eines einfachen, vorzugsweise runden Kanals mit geradem oder leicht verdralltem Luftstrom verwendet wird, um Rezirkulations- und/oder Stagnationsbereiche zu vermeiden.

6. Verfahren nach einem der Ansprüche 1 bis 4, **dadurch gekennzeichnet, dass** ein Vor-Vormischer, der aus engen Kanälen besteht, deren hydraulischer Durchmesser kleiner ist als die Löschentfernung, verwendet wird.

7. Verfahren nach Anspruch 5, **dadurch gekennzeichnet, dass** die Grenzschichten des Luftstroms in dem Vor-Vormischer (16) erregt werden, insbesondere durch Verwenden von etwas Filmluft, um die Geschwindigkeiten in diesen Bereichen zu erhöhen.

8. Verfahren nach Anspruch 7, **dadurch gekennzeichnet, dass** der Luftstrom zusätzlich über den "Strahlpumpen"-Effekt des Einspritzens großer Volumen von H₂/N₂-Brennstoff beschleunigt wird.

9. Verfahren nach einem der Ansprüche 1 bis 8, **dadurch gekennzeichnet, dass** Wassernebel in den H₂-reichen Brennstoff eingespritzt wird, um die Sicherheit des Verfahrens mittels des relativen Abkühlens aufgrund der darauf folgenden Verdampfung des eingespritzten Wassers zu verbessern.

10. Verfahren nach einem der Ansprüche 1 bis 9, **dadurch gekennzeichnet, dass** das Hauptdrallelement in einem drallstabilisierten Brenner (17) verwendet wird, um die Geschwindigkeit in dem Vor-Vormischer (16) weiter zu steigern, indem die Tatsache genutzt wird, dass der lokale statische Druck in dem zentralen Bereich des Brenners (17) niedriger ist als der Nennbrennerdruck.

11. Gasturbinenverbrennungssystem (10, 20) zum Anwenden eines Verfahrens nach einem der Ansprüche 1 bis 10, das Folgendes umfasst:
eine Brennkammer (13) und mindestens einen Brenner (17), der sich in die Brennkammer (13) öffnet, um einen Brennerluftstrom in die Brennkammer (13) einzuspritzen,
mindestens einen Vormischer,
mindestens einen Vor-Vormischer (11, 12; 16) zum Bereitstellen eines vorgemischten Luft-Brennstoffgemischs (C, 21),
wobei der mindestens eine Brenner (17) und der mindestens eine Vor-Vormischer (11, 12; 16) zueinander derart eingerichtet sind, dass das vorgemischte Luft-Brennstoffgemisch (C, 21) in den Brennerluftstrom eingespritzt wird.

12. Gasturbinenverbrennungssystem nach Anspruch 11, wobei der mindestens eine Vor-Vormischer (16) die Form eines einfachen, vorzugsweise runden Kanals mit geradem oder leicht verdralltem Luftstrom hat.

13. Gasturbinenverbrennungssystem nach Anspruch 11, wobei der mindestens einen Vor-Vormischer aus engen Kanälen besteht, deren hydraulischer Durchmesser kleiner ist als die Löschentfernung.

14. Gasturbinenverbrennungssystem nach einem der Ansprüche 11 bis 13, wobei der mindestens eine Brenner ein drallstabilisierter Brenner (17) ist.

15. Gasturbinenverbrennungssystem nach einem der Ansprüche 11 bis 13, wobei der mindestens eine Brenner ein AEV-Brenner ist.

16. Gasturbinenverbrennungssystem nach einem der Ansprüche 11 bis 13, wobei der mindestens eine Brenner ein SEV-Brenner ist.

## Revendications

1. Procédé de mélange sans danger de carburants riches en H2 avec de l'air dans un système de combustion de turbine à gaz (10, 20) comprenant une chambre de combustion (13), au moins un brûleur (17) situé en amont de la chambre de combustion, au moins un système de préprémélange (11, 12, 16) situé en amont du brûleur, et comprenant les étapes consistant à :
apporter un premier courant d'air de brûleur et un second courant d'un carburant riche en H2 ;
prémélanger le courant de carburant riche en H2 avec ledit premier courant d'air de brûleur dans le système de préprémélange (11, 12, 16) afin de produire un mélange carburant/air préprémélangé (21) ;
injecter le mélange carburant/air préprémélangé (21) et un courant d'air principal de brûleur (22) dans le brûleur (17) ;
faire en sorte que le mélange carburant/air totalement prémélangé (23) quitte le brûleur (17) afin d'entrer dans la chambre de combustion (13) ultérieure.

2. Procédé selon la revendication 1, **caractérisé en ce que** ladite étape de prémélange est effectuée de manière à éviter l'ancrage de la flamme à proximité du lieu d'injection et dans le brûleur.

3. Procédé selon la revendication 1 ou 2, **caractérisé en ce qu'**un facteur d'excès d'air de [lambda] > 1, de préférence de [lambda] > 1,3, est obtenu lors de ladite étape de prémélange.

4. Procédé selon l'une des revendications 1 à 3, **caractérisé en ce que** l'air est séparé en 02 et en N2 au moyen d'une unité de séparation d'air (ASU), et **en ce qu'**une partie du N2 provenant de l'unité de séparation d'air (ASU) est ajoutée à l'air principal de brûleur (D, 22) et/ou au mélange carburant/air préprémélangé (C, 21).

5. Procédé selon l'une des revendications 1 à 4, **caractérisé en ce qu'**un système de préprémélange (16) sous la forme d'un canal simple, de préférence arrondi, avec un courant d'air droit ou légèrement turbulent, est utilisé pour éviter des régions de recirculation et/ou de stagnation.

6. Procédé selon l'une des revendications 1 à 4, **caractérisé en ce qu'**un système de préprémélange consistant en des canaux étroits dont le diamètre est inférieur à la distance d'extinction est utilisé.

7. Procédé selon la revendication 6, **caractérisé en ce que** les couches limites du courant d'air dans ledit système de préprémélange (16) sont excitées, en particulier au moyen d'air en film, afin d'augmenter les vitesses dans ces régions.

8. Procédé selon la revendication 7, **caractérisé en ce que** le courant d'air est en outre accéléré via l'effet « pompe-éjecteur » lors de l'injection de grands volumes de carburant H2/N2.

9. Procédé selon l'une des revendications 1 à 8, **caractérisé en ce qu'**un brouillard d'eau est injecté dans le carburant riche en H2 afin d'améliorer la sécurité du procédé grâce au refroidissement relatif en raison de l'évaporation ultérieure de ladite eau injectée.

10. Procédé selon l'une des revendications 1 à 9, **caractérisé en ce qu'**un générateur de turbulence principal dans un brûleur à stabilisation de turbulence (17) est utilisé pour augmenter davantage la vitesse dans le système de préprémélange (16) en tirant parti du fait que la pression statique locale dans la région centrale du brûleur (17) est inférieure à la pression nominale du brûleur.

11. Système de combustion de turbine à gaz (10, 20) destiné à appliquer un procédé selon l'une des revendications 1 à 10, comprenant :
une chambre de combustion (13) et au moins un brûleur (17) s'ouvrant dans ladite chambre de combustion (13) afin d'injecter un courant d'air de brûleur dans ladite chambre de combustion (13) ;
au moins un système de prémélange ;
au moins un système de préprémélange (11, 12 ; 16) destiné à apporter un mélange carburant/air préprémélangé (C, 21) ;
ledit au moins un brûleur (17) et ledit au moins un système de préprémélange (11, 12; 16) étant mutuellement disposés de sorte que ledit mélange carburant/air préprémélangé (C, 21) soit injecté dans ledit courant d'air de brûleur.

12. Système de combustion de turbine à gaz selon la revendication 11, dans lequel l'au moins un système de préprémélange (16) a la forme d'un canal simple, de préférence arrondi, avec un courant d'air droit ou légèrement turbulent.

13. Système de combustion de turbine à gaz selon la revendication 11, dans lequel l'au moins un système de préprémélange consiste en des canaux étroits dont le diamètre est inférieur à la distance d'extinction.

14. Système de combustion de turbine à gaz selon l'une des revendications 11 à 13, dans lequel ledit au moins un brûleur est un brûleur à stabilisation de turbulence (17).

15. Système de combustion de turbine à gaz selon l'une des revendications 11 à 13, dans lequel ledit au moins un brûleur est un brûleur AEV.

16. Système de combustion de turbine à gaz selon l'une des revendications 11 à 13, dans lequel ledit au moins un brûleur est un brûleur SEV.
